## Europäisches Patentamt

## European Patent Office

## Office européen des brevets

(19)

(11) Veröffentlichungsnummer: **0 170 183**
**B1**

(12)

# EUROPÄISCHE PATENTSCHRIFT

(45) Veröffentlichungstag der Patentschrift:
08.02.89

(21) Anmeldenummer: 85109142.1

(22) Anmeldetag: 22.07.85

(51) Int. Cl.⁴: **C 08 F 279/02, C 08 F 287/00,**
**C 08 L 25/06**

(54) Verwendung von Kautschuken zur Herstellung von schlagfesten Vinylpolymeren und die so erhaltenen Vinylpolymeren.

(30) Priorität: 02.08.84 DE 3428496

(43) Veröffentlichungstag der Anmeldung:
05.02.86 Patentblatt 86/6

(45) Bekanntmachung des Hinweises auf die Patenterteilung:
08.02.89 Patentblatt 89/6

(84) Benannte Vertragsstaaten:
BE DE FR GB IT NL

(56) Entgegenhaltungen:
EP-A- 0 020 913
DE-B- 1 106 079
FR-A- 1 448 105
FR-A- 1 540 313
US-A- 3 494 983
US-A- 3 953 542

(73) Patentinhaber: BAYER AG, Konzernverwaltung RP
Patentabteilung, D-5090 Leverkusen 1 Bayerwerk (DE)

(72) Erfinder: Beck, Manfred, Dr., Weberstrasse 11a,
D-5272 Wipperfürth (DE)
Erfinder: Nentwig, Wolfgang, Dr., Sileslusstrasse 82,
D-5000 Köln 80 (DE)

# Beschreibung

Die Herstellung von schlagfestem Polystyrol (HIPS) mit Ethylen/Propylen/Dien-Terpolymeren (EPDM) ist im Vergleich zur Herstellung von HIPS mit Polybutadien aus verschiedenen Gründen erschwert. Polybutadien ist leicht in der gewünschten niedrigen Viskosität produzierbar und aufgrund seiner hohen Ungesättigtheit leicht pfropf- und vernetzbar. Zur Herstellung von HIPS geeignete EPDM-Typen mit hoher Ungesättigtheit bei gleichzeitig niedriger Viskosität lassen sich wesentlich schwieriger herstellen. Solche Typen liefern gelöst in Styrol Lösungen mit unerwünscht hoher Viskosität. Aufgrund der geringeren Pfropfbarkeit und Vernetzbarkeit werden ausserdem Polystyrole mit niedriger Kerbschlagzähigkeit erhalten.

Es wurde gefunden, dass man diese Nachteile verbessern kann, wenn man als Schlagfestmodifikatoren für HIPS Polymere einsetzt, die durch Copolymerisation von Ethylen, gegebenenfalls Propylen und gegebenenfalls einer Dienkomponente mit Styrol/Butadiencopolymeren oder Polybutadien (EPSB bzw. EPB) erhalten werden. Ein weiterer Vorteil bei der Verwendung dieser Polymeren liegt darin, dass man die Feinstruktur der daraus hergestellten schlagfesten Polystyrole und damit auch ihre Eigenschaften in einem weiten Bereich variieren kann, was mit üblichen EPDM-Typen nur sehr unvollkommen gelingt.

Gegenstand der Erfindung ist daher ein Verfahren zur Herstellung schlagzäher Kunststoffe aus Vinylpolymeren, wie Polystyrol oder Styrol/Acrylnitril-Copolymeren, nach bekannten Verfahren, dadurch gekennzeichnet, dass man als elastifizierende Komponente einen Kautschuk aus Styrol/Butadien- oder Dienpolymeren, Ethylen, gegebenenfalls Propylen und gegebenenfalls einem nicht-konjugierten Dien verwendet, der insbesondere durch ein Lösungspolymerisationsverfahren unter Verwendung von Ziegler-Katalysatoren hergestellt wurde.

Als elastifizierende Komponente geeignet sind EPDM-Kautschuke (EPSB) aus (a) 20 bis 90 Gew.-% Ethyleneinheiten, (b) 1 bis 25 Gew.-% Einheiten eines Butadien/Styrol-Copolymeren mit einem Styrolgehalt von 10 bis 90 Gew.-%, (c) 0 bis 10 Gew.-% Einheiten eines nicht konjugierten Diolefins und (d) als Differenz zu 100 Gew.-% aus $C_3$–$C_{18}$-$\alpha$-Monoolefineinheiten.

Ein weiterer Gegenstand der Erfindung sind schlagzähe Kunststoffe aus Vinylpolymeren modifiziert mit einem Kautschuk aus Styrol/Butadien- oder Dienpolymeren, Ethylen, gegebenenfalls Propylen und gegebenenfalls einem nicht konjugierten Dien.

Die anspruchsgemäss definierten Kautschuk-Typen können die beispielsweise definierte Polystyrol- und Polybutadien-Sequenzen oder statistisch verteilte Butadien/Styrol-Ketten enthalten. Diese sind besonders geeignet zur Herstellung von schlagfestem Polystyrol, da die Teilchengrösse der Elastomerphase bei Verwendung dieser Kautschuktypen in einem weitem Bereich gezielt eingestellt werden kann, wobei Produkte mit verbesserten mechanischen Daten erhalten werden. Ferner kann man sowohl die Anfangsviskosität der zur Herstellung von schlagfesten Kunststoffen eingesetzten Monomer/Kautschuk-Lösungen bis zu 50% niedriger einstellen als mit üblichen EPDM-Kautschuken als auch den relativen Viskositätsanstieg nach Beendigung der Phasenumkehr verringern.

Die Verwendung von EPDM-Kautschuk auf Basis von (EPB) liefert beim Pfropfen z.B. mit Styrol gröbere Teilchen, deren Innenstruktur sich von der aus handelsüblichem EPDM hergestellten schlagfesten Polystyrolen unterscheidet. Überraschend ist ferner, dass Lösungen der EPDM-Kautschuke auf Basis von Polybutadien (EPB) und auch EPSB in Styrol vor Beginn der Pfropfung eine höhere Viskosität aufweisen als nach Beendigung der Phasenumkehr. Dies ist beim technischen Prozess von Vorteil. Die aus diesen Kautschuken hergestellten Polystyrole besitzen im Vergleich zu EPDM verbesserte Kerbschlagzähigkeiten bei tiefen Temperaturen.

Die EPB-Kautschuke enthalten anstelle von Styrol/Butadien-Copolymeren des EPSB die analogen Mengen Polybutadien. Als Katalysatorsysteme eignen sich solche vom Typ der Ziegler-Katalysatoren, bevorzugt lösliche Systeme, besonders bevorzugt Katalysatoren mit Vanadium als Schwermetallkomponente in Verbindung mit metallorganischen Verbindungen, bevorzugt aluminiumorganischen Verbindungen wie Aluminiumtrialkyle, Dialkylaluminiumhalogenide, Alkylaluminiumdihalogenide oder Alkylaluminiumsesquihalogenide. Diese Systeme sind Stand der Technik zur Herstellung von EPDM-Kautschuken.

Zur Herstellung der EPSB-Kautschuke eignen sich Styrol/Butadien-Copolymere beliebiger Zusammensetzung. Beispiele hierfür sind:

1. Styrol/Butadien-Copolymere mit statistischer Verteilung

2. Styrol/Butadien-Blockpolymere

3. Styrol/Butadien-Blockpolymere mit im Übergangsbereich statistischer SB-Verteilung (tapered structure).

4. Mehrblockpolymere aus Styrol/Butadien.

Die Molekulargewichte liegen zwischen 1 000 und 1 000 000, vorzugsweise zwischen 5000 und 500 000, besonders bevorzugt zwischen 20 000 und 300 000. Der Vinylgehalt der Butadien-Komponente kann zwischen 7 und 100% liegen. Der Styrolgehalt der Copolymeren beträgt bevorzugt 20 bis 60%.

Die Butadien/Styrol-Copolymeren sind bekannt. So ist für den Fachmann verständlich, dass auch verzweigte, durch Kopplung oder andere Massnahmen erhaltene Polymere, ferner z.B. auch solche mit endständigen Polystyrol- oder auch endständigen Polybutadien-Blöcken hierunter fallen.

Beispiele für die zur Synthese geeigneten nichtkonjugierten Diene sind 1,4-Hexadien, Dicyclopentadien, 5-Ethyliden-2-norbornen.

Als Lösungsmittel sind inerte Kohlenwasserstoffe geeignet z.B. Aliphaten, Cycloaliphaten, Aromaten. Bevorzugt ist Hexan. Das Verfahren kann bei Temperaturen von −20 bis 150 °C, vorzugsweise von 20 bis 80 °C ausgeführt werden.

Das erfindungsgemässe aus den oben beschriebenen Kautschuken erhältliche Harz kann dadurch hergestellt werden, dass man Monomer(e) in Gegenwart des Kautschuks polymerisiert. Die Polymerisation kann nach jedem bekannten kontinuierlichen oder diskontinuierlichen Masse- oder Masse/Suspensionsverfahren ausgeübt werden. Diese Verfahren sind Stand der Technik. Beispiele hierfür sind in EP-A 86 123 oder DE-OS 31 12 935 beschrieben. Die erfindungsgemässe Styrolharzzusammensetzung enthält ein Pfropfpolymer aus dem oben beschriebenen Kautschuk, wobei die Menge des Kautschuks zwischen 2 und 25%, bezogen auf die Zusammensetzung, liegen kann. Besonders geeignet zur Herstellung der Styrolharze ist ein zweistufiges Verfahren bei welchem die Kautschuklösung in Styrol in erster Stufe bei Temperaturen von 80–120 °C zu einem Prepolymer umgewandelt wird. Danach suspendiert man in Wasser und polymerisiert zu Ende. Als Initiatoren für beide Stufen können bekannte organische Peroxide oder Azo-Katalysatoren verwendet werden. Beispiele hierfür sind Dicumylperoxid, Benzoylperoxid, Di-tert.-butylperoxid, tert.-Butyl-perbenzoat, 2,2-Dimethyl-2,5-bis(tert.-butylperoxi)hexen-3 oder tert.-Butyl-perhexanoat. Die Menge des Katalysators liegt je Stufe zwischen 0,01 und 2%, bevorzugt zwischen 0,04 und 1%. Auch eine thermische Polymerisation ohne Katalysator ist möglich. Als Molekulargewichtsregler können bekannte Substanzen wie Mercaptane oder Halogenkohlenwasserstoffe verwendet werden in Mengen von 0,05 bis 0,5%. Nach Beendigung der Stufe 1 fügt man die Prepolymerlösung zu einer wässrigen Lösung, welche geeignete Suspensionsmittel wie Polyvinylalkohol, Hydroxymethylcellulose, Polyvinylpyrrolidon u.ä. sowie anorganische Suspendiermittel beispielsweise aus der Reihe der Phosphate enthält. Ferner werden in dieser Stufe weitere geeignete Peroxide zugegeben.

Die Polymerisation der 2. Stufe wird bei Temperaturen von 80–170 °C, vorzugsweise im Bereich von 120–150 °C ausgeführt.

Die erfindungsgemässen Styrolharze können Zusätze enthalten, wie Antioxidantien und UV-Absorber, die Flammfestigkeit verbessernde Substanzen oder Füllstoffe.

Diskussion des Standes der Technik

Aus der US-PS 3 494 983 sind EPDM-Kautschuke der anspruchsgemäss zu verwendenden Art bekannt; vgl. z.B. Example 6. Sie können laut US-PS 3 494 983 zur Herstellung von Vulkanisaten verwendet werden. Die Verwendung dieser EPDM-Kautschuke als Modifikatoren zur Herstellung schlagzäher Kunststoffe aus Vinylpolymeren wird in der genannten US-Patentschrift weder erwähnt noch nahegelegt.

Verzeichnis der verwendeten Abkürzungen

| Abkürzung | Bezeichnung | gemessen in |
|---|---|---|
| L-Wert | Lösungsviskosität einer 5-proz. Lösung in Toluol bei 25 °C | ml/g |
| $C_3$ | Propylengehalt aus IR-Spektrum | % |
| MFI | Schmelzindex bei 200 °C/5 kg Belastung (DIN 53 735) | g/10 Min. |
| $H_c$ | Kugeldruckhärte (DIN 53 456) | N/mm² |
| Vicat B | ASTM (DIN 53 460) | °C |
| $a_K$ | Kerbschlagzähigkeit (DIN 53 453) | KJ/m² |
| RF | Reissfestigkeit (DIN 53 455) | MPa |
| D | Dehnung (DIN 53 455) | % |
| Gel | Unlösliches in Methylethylketon/Aceton (50:50) bei 25 °C | Gew.-% |

Beispiele
Styrol/Butadien-Copolymere

Tabelle 1

Folgende nach bekannten Verfahren hergestellte S/B-Copolymere wurden verwendet:

| | Gew.-% Styrol | Molekulargewicht Butadien-block | Styrol-block | Block-styrol | L-Wert[1] | 1,2-Gehalt[2] | Bemerkungen |
|---|---|---|---|---|---|---|---|
| A | 50 | 20 000 | 20 000 | 50,0 | 59,8 | 45 | Diblockpolymer-Herstellung durch getrennte Zugabe |
| B | 50 | 20 000 | 20 000 | 49,4 | 54,3 | 43 | Diblockpolymer-Herstellung durch getrennte Zugabe |

Tabelle 1 (Fortsetzung)

|   | Gew.-% Styrol | Molekulargewicht Butadien-block | Styrol-block | Block-styrol | L-Wert[1] | 1,2-Gehalt[2] | Bemerkungen |
|---|---|---|---|---|---|---|---|
| C | 50 | 80 000 | 80 000 | 50,9 | 194,0 | 45 | Diblockpolymer-Herstellung durch getrennte Zugabe |
| D | 50 | 80 000 | 80 000 | 47,7 | 342,0 | 45 | Diblockpolymer-Herstellung durch getrennte Zugabe |
| E | 40 | – | – | 31,4 | 310 | 10 | gemeinsame Zugabe[3] |
| F | 18 | – | – | 0 | | 10 | statistisches SBR[4] |

[1] η spez./C in Toluol, 5-proz.
[2] bez. auf Butadienanteil
[3] Blockpolymer mit Übergangsblock, Gesamtstyrol 40%
[4] statistisches SBR mit 18% Styrol; ML4' (100°) = 45
EPDM-Kautschuke 1–7

### Ethylen/Propylen-Dien-Pfropfpolymere

In einen 2 l-Reaktor wurden stündlich bei 60 °C folgende Mengen nachstehender Substanzen dosiert (soweit nichts anderes vermerkt, s. Tabelle 2):

| | |
|---|---|
| 2,7 | l n-Hexan, |
| 50 | g Ethylen, |
| 370 | g Propylen, |
| 2 | g Ethylidennorbornen (EN), |
| 0,767 | g Ethylaluminiumsesquichlorid (EASC), |
| 0,03 | g VOCl$_3$, |
| 0,43 | g Butylperchlorcrotonat (BPCC). |

Dabei waren die Katalysatorkomponenten getrennt in einem Teil des Hexans gelöst; EN und die in Tabelle 1 genannten Styrol/Butadien-Copolymeren bzw. das Polybutadien wurden in der übrigen Menge des Hexans gelöst.

Die Reaktion wurde mit konstant gehaltenem Reaktorinhalt gefahren, d.h. es wurden stündlich die gleichen Volumina entnommen wie zugefügt. Das dem Reaktor entnommene Gemisch wurde mit 100 ml/h Wasser abgestoppt, dann als Stabilisator 0,2 g/h 3-(4-Hydroxy-3,5-di-tert.-butylphenyl)-propionsäureoctadecylester zugefügt und das Polymer durch Fällen mit Ethanol isoliert. Nach dem Trocknen (14 Stunden, 70 °C) wurden die Proben untersucht (Tabelle 2).

Tabelle 2

Analytische Daten der E/P-Pfropfpolymeren

| EPDM-kautschuk | S/B-Polymer Typ[1] | g/h | Jod-zahl | C$_3$ % | L-Wert | Polymer g/h | Viskosität[3] in Styrol (5%) (m Pa sec) | Bemerkungen |
|---|---|---|---|---|---|---|---|---|
| 1 | D | 12 | 19,4 | 52,6 | 171 | 100 | 65 | |
| 2 | A | 12 | 21,7 | 52,6 | 140 | 91 | 40 | |
| 3 | A | 12 | 23,7 | 53,5 | 135 | 99 | 38 | |
| 4 | B | 18 | 15,6 | 53,6 | 142 | 100 | 45 | |
| 5 | E[2] | 6 | 13,2 | 37,0 | 236 | 166 | | 160 g/h Ethylen, 4 g/h EN |
| 6 | F | 15 | 25,7 | 46,6 | 235 | 170 | 45 | 160 g/h Ethylen, 4 g/h EN, Temp. 45 °C |
| 7 | C | 18 | 29,7 | 54,0 | 180 | 106 | 70 | |

[1] Vgl. Tabelle 1;
[2] ML-4' (100°) = 66, Defo-E = 4,4, Defo-H = 9;
[3] Gemessen mit einem Rotationsviskosimeter

### Beispiel 1–6
(schlagfestes Polystyrol aus den Kautschuken 1–6)

### Stufe 1

In einem 3 l-Gefäss wurden 150 g erfindungsgemäss verwendendes EPDM bzw. ein Vergleichs-EPDM, mit 45 Gew.-% Propylen und 8 Doppelbindungen je 1000 C-Atomen, L-Wert 184 als Vergleich in 1350 g Styrol gelöst. 31,5 g Weissöl, 1,6 g Trigonox B und 3,95 ml einer tert.

Dodecylmercaptanlösung (10 g t.-DDM in 100 ml Lösung) wurden zugegeben. Man erhitzte unter Stickstoff auf 105 °C und hielt diese Temperatur 3 Stunden konstant.

Stufe 2

Man lies unter Stickstoff abkühlen und füllte die Polystyrollösung unter Stickstoff in einen Autoklaven der mit 1250 g einer wässrigen Lösung eines Dispergiermittels beschickt war (5 g Polyvinylpyrrolidon und 1 g $Na_2P_2O_7$ zu 1000 ml Wasser). Man fügte 5,74 g Trigonox B zu. Unter Rühren (650 upm) wurde folgendes Temperaturprogramm durchgeführt: 1 Std. bei 120 °C, 2 Std. bei 140 °C und 3 Std. bei 150 °C. Nach dem Abkühlen wurden die Polymerisatperlen abfiltriert, gewaschen und im Vakuum getrocknet. Von dem Material wurden auf einer Spritzgussmaschine Normkleinstäbe gespritzt und an ihnen die mechanischen Standardwerte gemessen (DIN 53 453). Die Werte sind in Tabelle 3 zusammengestellt. Die Produkte zeigen gegenüber dem Vergleichsversuch verbesserte Kerbschlagzähigkeiten insbesondere bei niedrigen Messtemperaturen.

Beispiel 4 wurde nach einer modifizierten Rezeptur hergestellt: Stufe 1 mit 0,71 g Dicumylperoxid, 13,5 ml tert. Dodecylmercaptanlösung, 1,8 g 3-(4-Hydroxy-3,5-di-tert.-butylphenyl)-propionsäureoctadecylester. Stufe 2: Anstelle von Trigonox B wurden 1,2 g Dicumylperoxid eingesetzt. Tenperaturprogramm: 5 Stunden bei 120 °C und 7 Stunden bei 140 °C.

Tabelle 3

Eigenschaften von HIPS aus den Kautschuken 1–6

Stufe 1

| Beispiel | Kautschuk | Viskosität[1] vor | nach | Feststoff Gew.-(%) | upm | Durchmesser Kautschuk-phase (µm) |
|---|---|---|---|---|---|---|
| Vergleich | EPDM | 2000 | 2900 | 23,8 | 240 | 8–14 |
| 1 | 1 | 1600 | 6800 | 24,4 | 240 | 1–15 |
| 2 | 2 | 1150 | 1850 | 22,8 | 240 | 1– 2 |
| 3 | 3 | 1100 | 6200 | 23,0 | 60 | 1– 3 |
| 4 | 4 | 850 | 2400 | 29.0 | 240 | 1– 3 |
| 5 | 5 | 9200 | 4600 | 26,0 | 240 | 1–13 |
| 6 | 6 | 10900 | 3000 | 22,5 | 240 | 1–20 |

[1] gemessen mit Rotationsviskosimeter bei 25 °C

Tabelle 3 (Fortsetzung)

Stufe 2

| Beispiel | Gew.-% Gel | MFI 200/5 | $H_C$ | Vicat B | $a_K$ RT | (KJ/m²) −20° | RF MPa | D % |
|---|---|---|---|---|---|---|---|---|
| Vergleich | 28,5 | 19,2 | 57 | 82 | 3,8 | 2,2 | 20,1 | 34,0 |
| 1 | 27,2 | 10,6 | 62 | 83 | 4,3 | 2,7 | 20,8 | 22,8 |
| 2 | 29,5 | 18,2 | 65 | 83 | 3,7 | 2,7 | 21,3 | 28,6 |
| 3 | 33,4 | 12,8 | 59 | 84 | 3,9 | 2,8 | 20,6 | 44,0 |
| 4 | 38,7 | 2,9 | 103 | 91 | 5,5 | 2,6 | 45,7 | 4,4 |
| 5 | 31,6 | 7,8 | 46 | 86 | 4,6 | 4,6[1] | 21,0 | 44,0 |

[1] $a_K$ bei −40 °C: 3,4 KJ/m²

Beispiele 8–9
(schlagfestes Polystyrol aus E/P-gepfropftem Polybutadien)

1. Pfropfgrundlage für E/P-Pfropfung
   Zur Herstellung des E/P-Kautschuks kam als Pfropfgrundlage ein anionisch hergestelltes Polybutadienöl mit folgenden analytischen Kenndaten zur Anwendung: Molekulargewicht 1400 (Osmometer), Jodzahl 405, L-Wert 10,9, Vinylgehalt 45,6 Gew.-%.

2. Herstellung des E/P-Kautschuks auf Basis Polybutadien

Analog der Herstellung der Kautschuke 1–6 wurden E/P-Pfropfpolymere hergestellt. Anstelle des Styrol-Butadiencopolymers setzte man 4 g/h des oben beschriebenen Polybutadienöls ein. Abweichend von der Rezeptur wurden stündlich 100 g Ethylen eingesetzt. Der Kautschuk 9 wurde ferner ohne Zusatz von EN hergestellt (Tabelle 4)

Tabelle 4

| Kautschuk | EN g/h | Jodzahl | $C_3$ % | L-Wert | Ausb. g/h | Viskosität 5% in Styrol | ML4' (100°) |
|---|---|---|---|---|---|---|---|
| 8 | 2 | 5,5 | 49,0 | 197 | 136 | n.b. | 48 |
| 9 | – | 3,9 | 48,5 | 193 | 162 | 100 | 41 |

3. Schlagfestes Polystyrol aus den Kautschuken 8 und 9

Nach der Vorschrift der Beispiele 1–6 wurde unter Verwendung der Kautschuke 8 und 9 schlagfestes Polystyrol hergestellt. Besonders überraschend ist die Feststellung, dass die Viskosität der Lösung nach Beendigung der Stufe 1 des Verfahrens niedriger ist als zu Beginn. Die E/P gepfropften Polybutadiene liefern teilweise gröbere Teilchen und die Teilchengrössenverteilung der Kautschukphase ist sehr breit. Die Kerbschlagzähigkeit bei −20° ist stark verbessert (Tabelle 5).

Tabelle 5

Stufe 1

| Beispiel | Kautschuk | Viskosität vorher | (m Pa sec) nachher | Feststoff | upm | Durchm. Ktk.-Phase |
|---|---|---|---|---|---|---|
| Vergleiche | EPDM | 2000 | 2900 | 23,8 | 240 | 8–14 |
| 8 | 8 | 2500 | 2100 | 22,0 | 240 | 4–18 |
| 9 | 9 | 2500 | 1600 | 19,2 | 240 | 3–23 |

Tabelle 5 (Fortsetzung)

| | Stufe 2 Gel (%) | MFI 200/5 | $H_c$ | Vicat B | RT | $^aK$ −20° | RF (MPa) | D (%) |
|---|---|---|---|---|---|---|---|---|
| Vergl. | 28,5 | 19,2 | 57 | 82 | 3,8 | 2,2 | 20,1 | 34 |
| 8 | 27,9 | 11,0 | 53 | 85 | 3,9 | 3,3 | 18,0 | 23 |
| 9 | 27,8 | 12,0 | 57 | 82 | 4,0 | 3,1 | 20,7 | 49 |

## Patentansprüche

1. Verfahren zur Herstellung schlagzäher Kunststoffe aus Vinylpolymeren nach bekannten Verfahren, dadurch gekennzeichnet, dass man als elastifizierende Komponente einen Kautschuk aus Styrol/Butadien- oder Dienpolymeren, Ethylen, gegebenenfalls Propylen und gegebenenfalls einem nichtkonjugierten Dien verwendet.

2. Schlagzähe Kunststoffe aus Vinylpolymeren, enthaltend als Modifikator einen Kautschuk aus Styrol/Butadien- oder Dienpolymeren, Ethylen, gegebenenfalls Propylen und gegebenenfalls einem nicht-konjugierten Dien.

## Revendications

1. Procédé pour la fabrication de matériaux synthétiques résilients à partir de polymères de vinyle selon des procédés connus, caractérisé en ce que l'on utilise comme composants élastifiants un caoutchouc sur base de polymères de styrène/butadiène ou de polymères de diène, d'éthylène, éventuellement de propylène et éventuellement d'un diène non conjugué.

2. Matériaux résilients à partir de polymères de vinyle, contenant comme modifiant un caoutchouc à base de polymères de styrène/butadiène ou de polymères de diène, d'éthylène, éventuellement de propylène et éventuellement d'un diène non conjugué.

## Claims

1. Process for the production of impact resistant plastics of vinyl polymers by known processes, characterised in that of elasticizing component used is a rubber of styrene/butadiene or diene polymers, ethylene, optionally propylene and optionally a non-conjugated diene.

2. Impact resistant plastics of vinyl polymers, containing, as modifier, a rubber of styrene/butadiene or diene polymers, ethylene, optionally propylene and optionally a non-conjugated diene.